(19) Europäisches Patentamt
European Patent Office
Office européen des brevets

(11) **EP 3 748 840 B1**

(12) **EUROPEAN PATENT SPECIFICATION**

(45) Date of publication and mention
of the grant of the patent:
**23.11.2022 Bulletin 2022/47**

(21) Application number: **18904453.0**

(22) Date of filing: **27.12.2018**

(51) International Patent Classification (IPC):
*H02P 21/32* (2016.01)   *H02P 6/16* (2016.01)
*H02P 21/22* (2016.01)   *H02P 1/04* (2006.01)
*H02P 1/46* (2006.01)    *H02P 25/06* (2016.01)

(52) Cooperative Patent Classification (CPC):
**H02P 21/34; H02P 1/04; H02P 1/46; H02P 21/22;
H02P 21/32; H02P 25/06**

(86) International application number:
**PCT/JP2018/048073**

(87) International publication number:
**WO 2019/150868 (08.08.2019 Gazette 2019/32)**

(54) **MAGNETIC POLE POSITION ESTIMATION METHOD AND CONTROL DEVICE**

VERFAHREN UND VORRICHTUNG ZUR SCHÄTZUNG DER MAGNETPOLPOSITION

PROCÉDÉ D'ESTIMATION DE POSITION DE PÔLE MAGNÉTIQUE ET DISPOSITIF DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2018 JP 2018016143**

(43) Date of publication of application:
**09.12.2020 Bulletin 2020/50**

(73) Proprietor: **HITACHI INDUSTRIAL EQUIPMENT
SYSTEMS CO., LTD.**
**Chiyoda-ku**
**Tokyo 101-0022 (JP)**

(72) Inventors:
• **UEI Yusuke**
**Tokyo 101-0022 (JP)**
• **TAKANO Yuuri**
**Tokyo 101-0022 (JP)**
• **YANADA Tetsuo**
**Tokyo 101-0022 (JP)**

(74) Representative: **MERH-IP Matias Erny Reichl
Hoffmann**
**Patentanwälte PartG mbB**
**Paul-Heyse-Strasse 29**
**80336 München (DE)**

(56) References cited:
**EP-A1- 2 200 174    WO-A1-2007/114058
WO-A1-2011/115098   WO-A1-2017/022588
JP-A- 2006 296 027   US-A- 4 595 870
US-A1- 2010 286 948**

**Description**

This application claims priority of Japanese Patent JP2019134620.

TECHNICAL FIELD

The present invention relates to a method and a device of magnetic pole position estimation of an electric motor.

BACKGROUND ART

In electric motor control, the electric motor is driven with a current flowing in a q-axis direction (current phase at 90 degrees), and the electric motor is not driven with a current flowing continuously in a d-axis positive direction displaced by 90° with respect to the q-axis direction (current phase at 0 degree) or a d-axis negative direction (current phase at 180 degrees). Thus, when a magnetic pole position recognized by a control device side and an actual magnetic pole position of the electric motor are different from each other, the electric motor may be, for example, driven in the opposite direction of a desired driving direction or moved further than a desired driving movement amount, and it is impossible to perform precise control. For this reason, when starting control of the electric motor, it is required to match the magnetic pole position recognized by the control device side with the actual magnetic pole position of the electric motor.

Patent Literature 1 is an example of such a method of magnetic pole position estimation. Patent Literature 1 describes that "In a magnetic pole position estimation method of a synchronous electric motor that decides a current phase to be applied based on a provisional magnetic pole position as a starting position, a current is applied to a phase in which an electric angle inverse cycle is split in N based on the provisional magnetic pole position, and moving methods (+, 0, -) in this process are determined to decide the current phase."

Patent Literature 2 discloses a motor control device which can estimate a magnetic pole position in case of large friction or a heavy load.

Patent Literature 3 discloses a method for estimating a magnetic pole position of a synchronous motor.

Patent Literature 4 discloses: If there is static friction, the magnetic pole position estimation is completed at the time when error torque used for magnetic pole position estimation becomes less than the friction, so that there remains magnetic pole error.

CITATION LIST

PATENT LITERATURE

Patent Literature 1: Japanese Patent Application Publication No. 2014-36450
Patent Literature 2: EP 2 200 174 A1
Patent Literature 3: JP 2006 296027 A
Patent Literature 4: US 2010/286948 A1

SUMMARY OF INVENTION

TECHNICAL PROBLEM

In the method of Patent Literature 1, a current is applied to a phase in which an electric angle half cycle is split in N based on the provisional magnetic pole position, and moving directions D (+, 0, -) in this process are detected, respectively. Next, two phases Dn+ and Dn- in which moving directions are inverted to each other are stored, and a moving direction in a middle phase is detected. When a moving direction Dnl in the middle phase is +, then a moving direction in the middle of Dnl and Dn- is detected, and this process is repeated to find phase information with which a moving direction becomes 0. There is described that, as a current command value used for the magnetic pole position estimation operation, either smaller one of an absolute value of a q-axis current command from a stage preceding the magnetic pole position estimation operation and a current command value set in advance for the magnetic pole position estimation is used, and this makes it possible to control a movement speed of the electric motor to avoid exceeding a speed limit command.

However, when the current command is a signal in the form of step like that in Patent Literature 1, there is a risk that a movement amount of the electric motor may be too great if the magnetic pole position is displaced by 180 degrees with respect to an expectation. Additionally, when the step signal of the current command is great and a control gain of a speed controller is not set properly, there is a risk that the speed limit command is not controlled properly.

SOLUTION TO PROBLEM

The above-described problem is solved in accordance with the appended claims.

ADVANTAGEOUS EFFECTS OF INVENTION

According to an aspect of the present invention, it is possible to reduce a movement amount of an electric motor and achieve accurate estimation of a magnetic pole position and electric motor control based on the estimation. Other object, characteristics, and advantages of the present invention will be apparent from the following descriptions of embodiments of the present invention related to the accompanying drawings.

BRIEF DESCRIPTION OF DRAWINGS

[FIG. 1] A control block diagram of an electric motor control device to which a magnetic pole position estimation device according to a first embodiment to which the present invention is applied.
[FIG. 2] A diagram illustrating magnetic pole position changes of an electric motor according to the first embodiment to which the present invention is applied.
[FIG. 3] A waveform diagram of q-axis current command waveforms, a present position of the electric motor, and positions for movement determination of the electric motor according to the first embodiment to which the present invention is applied.
[FIG. 4] A flowchart of magnetic pole position estimation procedures according to the first embodiment to which the present invention is applied.
[FIG. 5A] A magnetic pole position estimation procedure flowchart of during an electric motor operation in the magnetic pole position estimation according to the first embodiment to which the present invention is applied.
[FIG. 5B] A magnetic pole position adjustment procedure flowchart of during an electric motor operation in a magnetic pole position adjustment according to the first embodiment to which the present invention is applied.
[FIG. 6] A waveform diagram of q-axis current command waveforms, a present position of an electric motor, and positions for movement determination of the electric motor according to a second embodiment to which the present invention is applied.
[FIG. 7] A diagram illustrating magnetic pole position changes of an electric motor according to a third embodiment to which the present invention is applied.
[FIG. 8] A waveform diagram of q-axis current command waveforms, a present position of the electric motor, and positions for movement determination of the electric motor according to the third embodiment to which the present invention is applied.

DESCRIPTION OF EMBODIMENTS

When an electric motor is driven in electric motor control, the electric motor is driven with a current flowing in a q-axis direction, and the electric motor is not driven with a current flowing continuously in a d-axis direction displaced by 90° with respect to the q-axis direction.
In the present invention, with a current being applied to the electric motor, every time it is determined that a rotor is moved, a magnetic pole position error angle $\theta$err with respect to the electric motor is adjusted, and a direction of a q-axis current applied to the electric motor is adjusted to be in an opposite direction of that of an actual d-axis. This is a method of adjusting a q-axis direction recognized by a control device 101 side to be matched with a q-axis direction of the electric motor by displacing by 90° the magnetic pole position recognized by the control device side after the current application is terminated.
Hereinafter, a method and a device of magnetic pole position estimation of an electric motor are described, and embodiments of means of changing a magnetic pole position while driving the electric motor, adjusting the magnetic pole position in a d-axis direction in which the electric motor does not move regardless of a current value, and displacing the magnetic pole position in a q-axis direction after the adjusting is terminated are described.

EMBODIMENT 1

In this embodiment, an example in which the present invention is applied to a direct operation type electric motor (linear motor) is described. There are described embodiments of first means, second means, and third means for adjusting a magnetic pole position error angle θerr with respect to the electric motor based on a moving direction and a movement amount of a rotor while driving the electric motor in response to a q-axis current command (also referred to as "torque command") generated by a q-axis current command generator.

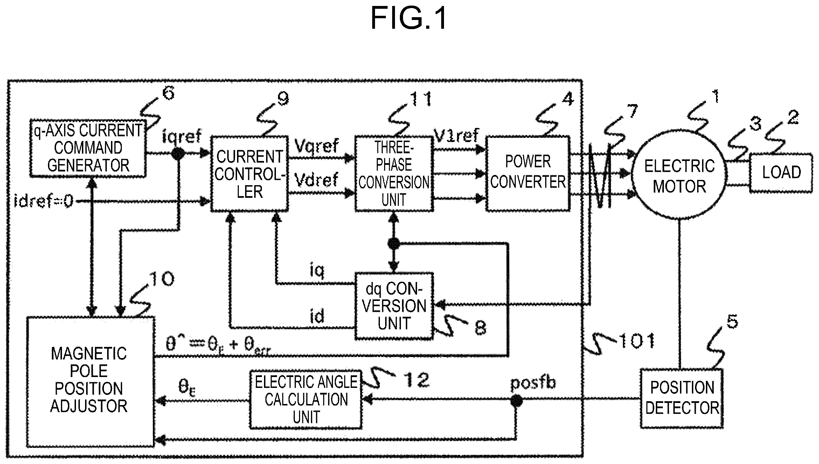

First, an example of control blocks that execute a magnetic pole position estimation function by using a control device 101 is described. FIG. 1 is a control block diagram in which a magnetic pole position of an electric motor according to an embodiment of the present invention is estimated, and a magnetic pole position error angle θerr, which is an error between the magnetic pole position of the electric motor held in an electric motor control device and a magnetic pole position of the actual electric motor, is estimated.

FIG. 1 is an overall schematic configuration diagram of a control device of a synchronous electric motor according to an embodiment of the present invention. A synchronous electric motor 1 includes a stator and a rotor (not-illustrated), and a load 2 is a driving target load driven by the electric motor 1. The control device 101 is a device that supplies power to the electric motor 1 and controls the electric motor. An inverter, a servo amplifier, or the like may be the control device 101, for example. A power converter 4 applies a three-phase alternating current voltage to the synchronous electric motor 1. Three-phase alternating currents I1 flowing through the synchronous electric motor 1 are detected by a current detector 7. A position detector 5 generates a pulse train according to a movement amount posfb of the electric motor rotor. Accordingly, it is possible to figure out a magnetic pole position θE of the electric motor rotor by counting an output pulse of this position detector 5 by an electric angle calculation unit 12.

Based on this detected electric angle θE, a magnetic pole position adjustor 10 outputs a corrected (estimated) electric angle θ^ by a magnetic pole position estimation method described later. The estimated electric angle θ^ is calculated by adding the magnetic pole position θE of the electric motor rotor to the magnetic pole position error angle θerr. Based on this estimated electric angle θ^, a dq conversion unit 8 converts the three-phase detection currents I1 into two-phase detection currents iq and id.

A q-axis current command generator 6 calculates a q-axis current command value iqref based on a q-axis current command value iqref. A current controller 9 performs calculation to match the q-axis current command value iqref and a d-axis current command value idref with the q-axis current detection value iq and the d-axis current detection value id as the output values of the dq conversion unit 8, respectively, and outputs two-phase command voltages Vqref and Vdref. A three-phase conversion unit 11 uses the estimated electric angle θ^ to convert the two-phase command voltages Vqref and Vdref into three-phase command voltages V1ref.

While executing magnetic pole position estimation processing, the magnetic pole position adjustor 10 receives the present position posfb of the rotor from the position detector 5, the q-axis current command iqref from the q-axis current command generator 6, and the magnetic pole position θE of the electric motor rotor from the electric angle calculation unit 12, respectively, and adjusts the magnetic pole position error angle θerr according to a moving direction and a movement amount of the rotor. The magnetic pole position adjustor 10 uses the present position posfb obtained by the position detector 5 to adjust the magnetic pole position error angle θerr such that a q-axis direction recognized by the electric motor control device is matched with a q-axis direction of the electric motor, and reflects the adjusted result to the current controller 9 to perform the electric motor control.

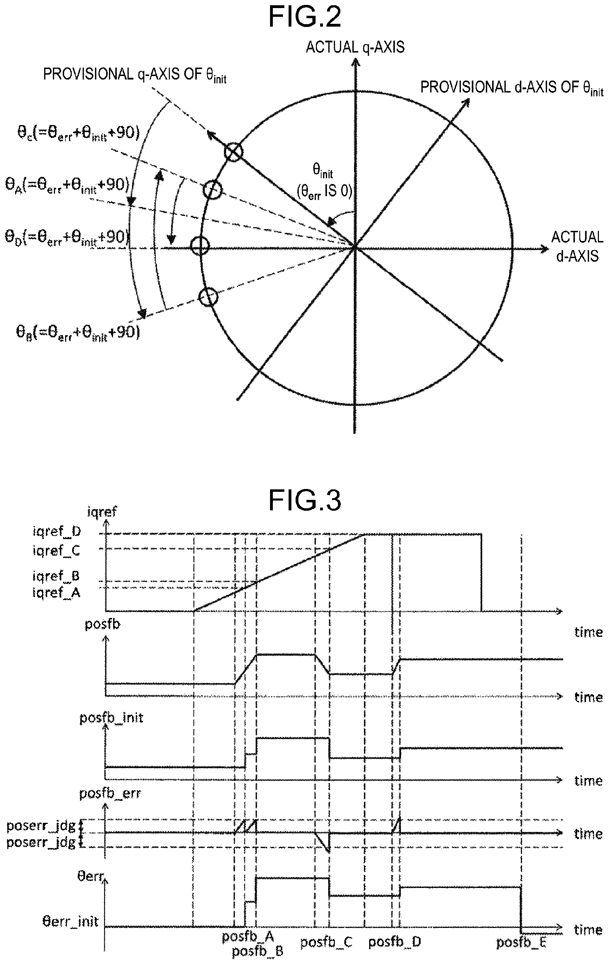

FIG. 2 illustrates the adjustment of the magnetic pole position error angle θerr with respect to the electric motor. A horizontal axis of the graph is an actual d-axis, and a vertical axis is an actual q-axis. θinit is an error angle between the magnetic pole position of the electric motor and a magnetic pole position recognized by the control device when starting the magnetic pole position estimation, and θA to θD are error angles between magnetic pole positions of the electric motor and magnetic pole positions recognized by the control device in the magnetic pole position estimation, respectively, when q-axis current commands iqref_A to iqref D shown in a waveform 100 are obtained. The magnetic pole position estimation is started with the magnetic pole position error angle θerr with respect to the electric motor being set as θerr = 0, since it is impossible to recognize the error angle with respect to the electric motor magnetic before starting the magnetic pole position estimation.

In the present invention, the magnetic pole position error angle θerr is adjusted, and the adjusting is performed with an error angle θD with respect to the electric motor in magnetic pole position estimation D being set as a target magnet pole position, the error angle θD allowing the q-axis direction recognized by the control device to be in an opposite direction of that of the actual d-axis. That is, the control device 101 starts the magnetic pole position estimation while setting the magnetic pole position error angle θerr = 0 from a point of the initial magnetic pole position θinit, rotates gradually a magnetic pole recognized by the control device, and stores the magnetic pole position which reaches θD as the actual measurement magnetic pole position. In order to start control thereafter, the actual measurement magnetic pole position θD is rotated -90°, and the magnetic pole position on the q-axis (position at 90°) is stored as a control start magnetic pole position. Specific descriptions are described later.

FIG. 3 is a graph using the control blocks of the electric motor control device illustrated in FIG. 1 to show each of q-axis current command waveforms in the magnetic pole position estimation of the electric motor, the present position posfb of the electric motor, a reference present position posfb init as a reference position to change the magnetic pole position, a deviation amount posfb_err between the present position posfb and the reference present position posfb init, and the magnetic pole position error angle $\theta$err with respect to the electric motor.

The top waveform is a waveform of the q-axis current command iqref outputted from the q-axis current command generator 6. After starting the magnetic pole position estimation processing, the q-axis current command iqref increases gradually a q-axis current command application amount and applies the q-axis current command iqref to reach a q-axis current command maximum value iqref_max. The present position waveform of the rotor in this process is shown as posfb. posfb init is a graph showing the reference position posfb_init that determines a movement amount. The determination reference position is a value that is updated every time the magnetic pole position error angle $\theta$err is changed.

The following waveform is a waveform of the difference posfb _err between the present position posfb of the rotor and the reference present position posfb_init. Based on this movement amount and moving direction (+ direction or - direction), the magnetic pole position adjustor 10 determines whether the present magnetic pole position is positioned in the q-axis direction (upper half of a circle in FIG. 2) or positioned in a -q-axis direction (lower half of the circle in FIG. 2). $\theta$err is the magnetic pole position error angle $\theta$err with respect to the electric motor. In FIG. 3, for $\theta$err, the magnetic pole position error angle $\theta$err when starting the magnetic pole position estimation is set to 0, and a case of rotating the magnetic pole counterclockwise is shown as a positive direction, and a case of rotating the magnetic pole clockwise is shown as a negative direction.

Next, procedures of the magnetic pole position estimation in this embodiment are described with reference to FIGS. 2 and 3.

The present position posfb of the rotor of the electric motor is changed according to a q-axis current command generating the q-axis current command iqref applied to the current controller of the electric motor control device 101. In a stage where the q-axis current command is small, a power applied to the electric motor is small, and thus the present position posfb of the electric motor is not changed. As an application amount of the q-axis current command is increased gradually, a torque applied to the electric motor is increased gradually, and thus the electric motor starts to be operated at a point of posfb_A. At the posfb _A point, since the electric motor is moved in the positive direction, and the q-axis current command is in the positive direction, the magnetic pole position adjustor 10 determines that the magnetic pole position direction $\theta$A of the electric motor is the positive q-axis direction.

Additionally, when the difference posfb _err between the present position posfb and the reference present position posfb init becomes greater than the magnetic pole position change determination value poserr_jdg, it is determined that the magnetic pole position error angle $\theta$err with respect to the electric motor needs to be adjusted, and the magnetic pole position adjustor 10 adjusts the magnetic pole position error angle $\theta$err with respect to the electric motor by 30 degrees in a + direction. That is, processing of rotating the present magnetic pole position 30° in the positive direction is performed.

Since the electric motor at a posfb_B point keeps moving in the positive direction as well, as with the posfb_A point, the magnetic pole position error angle $\theta$ with respect to the electric motor is adjusted by 30° in the + direction. That is, processing of rotating the present magnetic pole position 30° in the positive direction is performed.

At a posfb_C point, since the electric motor is moved in the negative direction, the magnetic pole position error angle $\theta$err with respect to the electric motor is adjusted by 20° in the - direction, which is the opposite direction of that of the posfb _A point. That is, processing of rotating the present magnetic pole position 20° in the negative direction is performed.

At a posfb_D point, since the electric motor is moved in the positive direction, the magnetic pole position error angle $\theta$err with respect to the electric motor is in the positive q-axis direction again due to the displacement of the magnetic pole position error angle $\theta$err with respect to the electric motor in the - direction at the posfb_C point. Thus, as with the posfb_A point, the magnetic pole position error angle $\theta$err with respect to the electric motor is adjusted in the + direction.

Since the movement deviation posfb_err of the rotor remains at 0 although the q-axis current command is thereafter increased to the maximum value (iqref max) in the magnetic pole position estimation processing, the magnetic pole position adjustor 10 determines that the present magnetic pole position $\theta$D is on the d-axis and stores $\theta$D as the actual measurement magnetic pole position.

After the actual measurement magnetic pole position is stored, a magnetic pole position that is a magnetic pole position further rotated -90° as shown at a posfb_E point is stored as the control start magnetic pole position, and the magnetic pole position estimation processing is terminated. A relationship between the magnetic pole position error angle $\theta$err at the posfb_D point and the magnetic pole position error angle $\theta$init when starting the magnetic pole position estimation is expressed as Equation (1).

(MATH. 1)

$$\theta D = \theta err + \theta init + 90 \qquad \ldots \text{Equation (1)}$$

In this embodiment, since θerr at the posfb_D point is 50°, and θD at the posfb_D point is 180°, the magnetic pole position error angle θinit when starting the magnetic pole position estimation = 40° is calculated. Consequently, if the magnetic pole position error angle θerr when starting the magnetic pole position estimation is set to 0, the magnetic pole position error angle θerr matched with the actual q-axis direction is -40°.

Note that, although the magnetic pole is rotated 30° each time and is rotated 20° each time after the sign is inverted in the descriptions of FIG. 3, the interval is not necessarily 30°. For example, the rotation can be at 210° each time, the rotation can be at different angles each time, or the angle can be set arbitrarily.

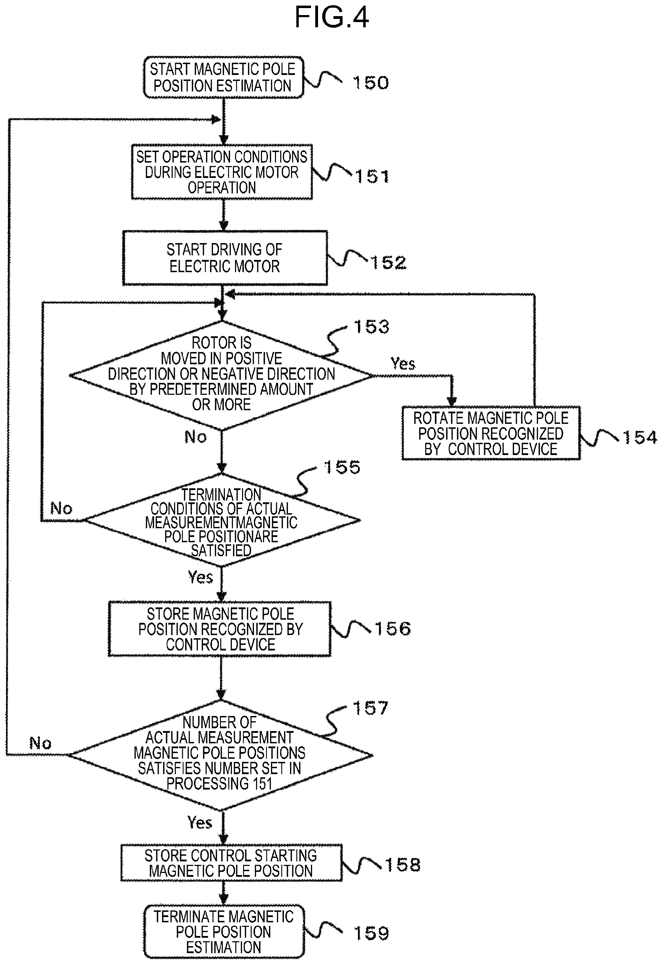

FIG. 4 is a flowchart illustrating procedures of the magnetic pole position estimation processing of the electric motor using the control blocks of the electric motor control device illustrated in FIG. 1.

First, in order to implement the magnetic pole position estimation method of the electric motor, the magnetic pole position estimation method is started in processing 150.

In processing 151, operation conditions for operating the electric motor are set in the control device 101. As the operation conditions, conditions required for the magnetic pole position estimation such as the maximum value iqre_max of the q-axis current command iqref outputted from the q-axis current command generator 6, an inclination of q-axis current command in the increase of the q-axis current command iqref, how many times the processing of obtaining the actual measurement magnetic pole position is performed, the magnetic pole position adjustment determination value poserr_jdg, and so on, and the process proceeds to processing 152.

In processing 152, the control device 101 actually operates the electric motor in response to the q-axis current command iqref outputted from the q-axis current command generator 6.

In processing 153, the position detector 5 measures the present position posfb of the rotor, and the magnetic pole position adjustor 10 determines whether the rotor is moved in the positive direction or the negative direction from the reference present position posfb init by the change determination value poserr_jdg or more. When it is determined that the rotor is moved by the change determination value poserr_jdg or more, the process proceeds to processing 154, and the magnetic pole position adjustor 10 rotates the magnetic pole position in a direction same as the moving direction to adjust the magnetic pole position error angle θerr with respect to the electric motor. The magnetic pole position direction of the current flowing through the electric motor is adjusted to be in the d-axis direction by repeating processing 153 and processing 154.

When the movement amount of the rotor is poserrjdg or less, the process proceeds to processing 155. In processing 155, it is determined whether to continue the magnetic pole position estimation under the operation conditions set in processing 151. For example, it may be determined that the magnetic pole position direction of the electric motor is on the d-axis because the movement amount of the rotor becomes the movement amount poserr_jdg of the rotor or less. For another example, it may be determined that the magnetic pole position direction of the electric motor is on the d-axis when the movement amount of the rotor is the movement amount poserrjdg of the rotor or less with the q-axis current command iqref being applied continuously for a predetermined period of time at the q-axis current command maximum value iqref max,. When the termination conditions are not satisfied in the determination in processing 155, the process proceeds to processing 153, and the magnetic pole position estimation under the same conditions is continued. When the termination conditions are satisfied, the process proceeds to processing 156. In processing 156, the magnetic pole position adjustor 10 stores the magnetic pole position as the actual measurement magnetic pole position.

In processing 157, it is determined whether the magnetic pole position estimation processing is performed the number of times set in processing 151. For example, in the present invention, since the q-axis current command value is applied in one direction, there may be effects of static friction and kinetic friction of the electric motor with single patterned operation conditions. To deal with this, a total of four times of driving with the magnetic pole position when starting the magnetic pole position estimation being displaced by 0°, 90°, 180°, and 270° makes it possible to drive the motor in not only the one direction but also in the opposite direction. In this case, the magnetic pole position adjustor 10 determines whether the actual measurement magnetic pole position is stored at each of the initial positions. When the number of the actual measurement magnetic pole positions does not reach the set value, the process proceeds to processing 151 to change the setting of the initial position of the magnetic pole, and the process proceeds again to the processing of storing the actual measurement magnetic pole position.

When the number of the actual measurement magnetic pole positions reaches the set value, the process proceeds to processing 158, and the magnetic pole position adjustor 10 determines that the number of times of measurement set in processing 151 is terminated, stores an average value of all the actual measurement magnetic pole positions as a final actual measurement magnetic pole position, and stores a value obtained by displacing the average value by -90° as the control start magnetic pole position. Thereafter, the process proceeds to processing 159, and the magnetic pole position estimation is terminated. The information on the magnetic pole position used for calculating the average value is deleted later. The timing of deleting may be when every time the average value is calculated or may be in a predetermined timing such as once a month.

Note that, when the number of times of obtaining the actual measurement magnetic pole position is set to once, a position displaced from the actual measurement magnetic pole position by -90° is directly set as the control start magnetic pole position.

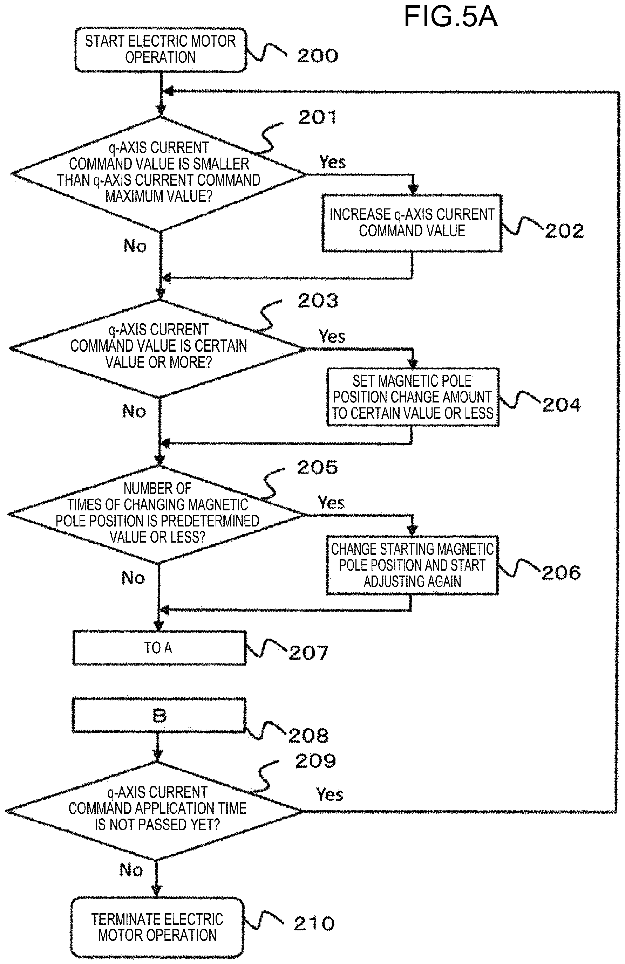

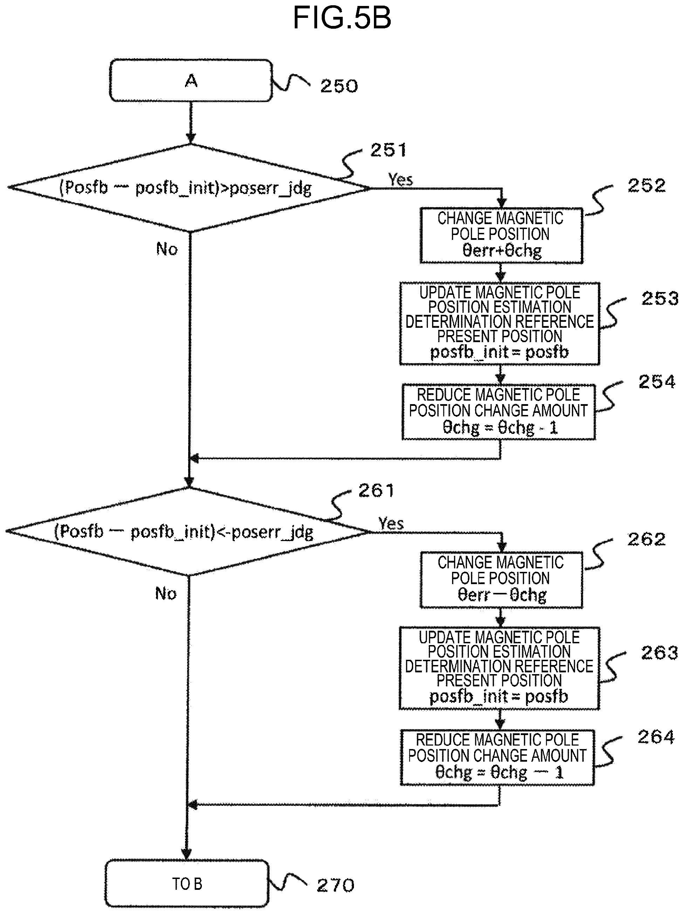

FIGS. 5A and 5B are flowcharts showing detailed procedures of the operations of processing 153 to processing 156 shown in FIG. 4.

The electric motor in the magnetic pole position estimation starts the operation by processing 152 and applies the q-axis current command from the q-axis current command generator 6, and the process proceeds to processing 201. In processing 201, the q-axis current command generator 6 performs determination on the increase of the q-axis current command value. When the present q-axis current command value iqref is smaller than the q-axis current command maximum value iqref_max set in processing 151, the process proceeds to processing 202. In processing 202, the q-axis current command value iqref is increased, and the process proceeds to processing 203. When the q-axis current command value is equal to or more than the q-axis current command maximum value iqref_max, the q-axis current command value iqref is not increased, and the process proceeds to processing 203.

In processing 203, when the q-axis current command value is equal to or more than an arbitrary value, the process proceeds to processing 204. Processing 204 is processing of reducing a magnetic pole position change amount θchg to a certain threshold when it is determined that a change amount when changing the magnetic pole position is great in the case where the q-axis current command value is equal to or more than the arbitrary value. This is for a possibility that, if the magnetic pole position error angle θerr with respect to the electric motor is changed greatly when the q-axis current command iqref is increased, the rapid change of the magnetic pole position error angle θerr with respect to the electric motor may increase the movement amount of the electric motor. To deal with this, this is processing of reducing the rapid change of the magnetic pole position by reducing the magnetic pole position change amount θchg when the q-axis current command value is equal to or more than a certain q-axis current command value. Note that, in this processing, the change amount may be narrowed down by setting a threshold for each of multiple q-axis current commands. For example, when the q-axis current command value is 0 to 30[%] of the q-axis current command value maximum value, the maximum value of the magnetic pole position change amount is 30°, when the q-axis current command value is 30 to 70[%] of the q-axis current command value maximum value, the maximum value of the magnetic pole position change amount is 20°, and when the q-axis current command value is 70 to 100[%] of the q-axis current command value maximum value, the maximum value of the magnetic pole position change amount θchg is 5°. Once processing 204 is terminated, the process proceeds to processing 205.

In processing 205, when the magnetic pole position adjustor 10 determines that the number of times of changing the magnetic pole position is equal to or less than a predetermined number of times designated in processing 151 in advance, the process proceeds to processing 206.

Processing 206 is processing of changing the magnetic pole position for starting to begin the magnetic pole position estimation again. In this processing, for example, when the start position of the magnetic pole position estimation is totally opposite of the d-axis direction (position at 0°) from the beginning, the electric motor terminates the magnetic pole position estimation with no operations. In this case, since the magnetic pole position recognizes as a correct position the position totally opposite of the magnetic pole position that is originally the target, there is a risk that the control start magnetic pole position is set to the negative q-axis direction (270°) if the magnetic pole position is rotated -90°. In order to avoid this, in the magnetic pole position estimation, the magnetic pole position estimation is set to be performed the number of times of a predetermined value.

Note that, in processing 205, the number of times of the predetermined value may be set for each of the multiple q-axis current commands. For example, when the electric motor is not moved at all until the q-axis current command value reaches 30[%] of the q-axis current command value maximum value, when the electric motor is moved only two times until the q-axis current command value reaches 70[%] of the q-axis current command value maximum value, and when the electric motor is moved only five times until the q-axis current command value reaches 100[%] of the q-axis current command value maximum value, the process proceeds to processing 206. Once processing 206 is terminated, the process proceeds to processing 250 by way of processing 207.

Additionally, in processing 205, when it is determined that the number of times of changing the magnetic pole position is equal to or more than the predetermined number of times set in processing 151, the process proceeds to processing 251 in FIG. 5B.

Processing 251 is processing in which the magnetic pole position adjustor 10 determines whether a difference between the present position posfb and the reference present position posfb init of the electric motor is greater than the magnetic pole position change determination value poser jdg set in processing 151 in advance. With this processing, it is determined whether the rotor is moved in the positive direction. When the difference between the two positions satisfies Equation (2) below, it is determined that the rotor is moved in the positive direction, and the process proceeds to processing 252. When Equation (2) is not satisfied, it is determined that the rotor is not moved in the positive direction, and the process proceeds to processing 261.

(MATH. 2)

$$posfb - posfb\_init > poser\_jdg \ldots Equation\ (2)$$

In processing 252, since the rotor is moved in the positive direction, and the q-axis current command is in the positive direction, it is determined that the magnetic pole position is in the positive q-axis direction. Thus, the magnetic pole position is θerr + θchg, and the magnetic pole is changed in the + direction. In processing 253, after the magnetic pole position is changed, the reference present position posfb _init as a reference position for determining the new change in the magnetic pole position is updated to the present position posfb. After update, the process proceeds to processing 254.

In processing 254, the magnetic pole position is reduced to be narrowed down gradually by reducing the change amount of the magnetic pole position. For example, when the magnetic pole position is at a position of 105°, the target magnetic pole position is at 180°, and the magnetic pole position change amount is 30°, the angle becomes 135° by the first time magnetic pole position change, the angle becomes 164° by the first time magnetic pole position change, and the angle is adjusted to 192°, 165°, 191°, 166°, and so on and can be adjusted until reaching 180°. Note that, the reduction amount of the position change amount may be set to an arbitrary value. After processing 254 is terminated, the process proceeds to processing 261.

Processing 261 is processing of determining whether the difference between the present position posfb of the rotor and the reference present position posfb _init is smaller than the magnetic pole position change determination value poser_jdg × -1 set in processing 151 in advance. With this processing, it is determined whether the rotor is moved in the negative direction. When Equation (3) is satisfied, it is determined that the rotor is moved in the negative direction, and the process proceeds to processing 262. Note that, when Equation (3) is not satisfied, it is determined that the rotor is not moved in the negative direction, and the process proceeds to processing 270.

(MATH. 3)

$$posfb - posfb\_init < (poser\ jdg \times -1)\quad \ldots Equation\ (3)$$

In processing 262, since the electric motor is operated in the negative direction, and the q-axis current command is in the positive direction, it is determined that the magnetic pole position is in the negative q-axis direction. Thus, the magnetic pole position is θerr - θchg, and the magnetic pole is rotated in the - direction. Processing 263 and processing 264 are similar to processing 253 and processing 254, respectively. After update, the process proceeds to processing 209 by way of processing 270.

In processing 209, it is determined whether the q-axis current command application time designated in processing 151 in advance is passed, and when the designated time is passed, the process proceeds to processing 210, and the electric motor operation in the magnetic pole position estimation is terminated. When the designated time is not passed, the process returns to processing 201.

As described above, it is possible to reduce the movement amount of the rotor to a small amount by rotating the magnetic pole position according to the movement amount and the moving direction while increasing gradually the q-axis current command. Particularly, if the rotor is moved greatly in the case of the direct operation type electric motor described in this embodiment, there is a risk of colliding with an electric motor housing and the like or a risk that the housing and the like prevents the movement and the magnetic pole position estimation cannot be performed precisely, and the present invention is therefore particularly effective.

Note that, although this embodiment is described using the direct operation type electric motor, it is needless to say that the present invention is also applicable to a cylindrical type electric motor. In the case of applying the present invention to the cylindrical type electric motor, the rotor corresponds to a rotator.

EMBODIMENT 2

Embodiment 2 is an example in which the application of the q-axis current command iq_ref applied in the magnetic pole position estimation operation described in Embodiment 1 coincides with the magnetic pole position adjustment, and the electric motor is a radial gap type electric motor including a stator and a rotator.

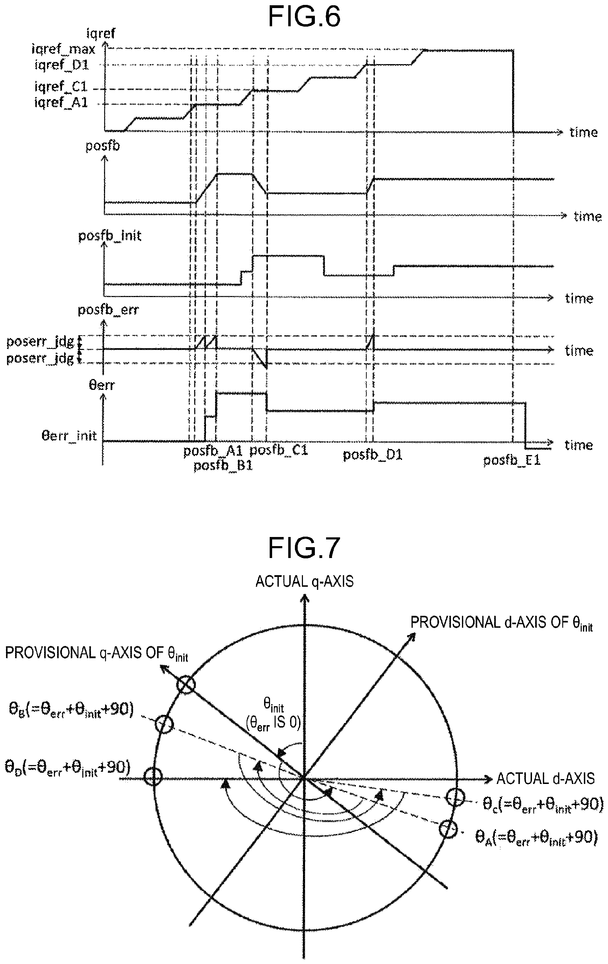

FIG. 6 is a graph showing time lapses of the q-axis current command iqref, the present position posfb, the reference present position posfb init, and so on as with FIG. 3. Hereinafter, procedures in a stay operation of this embodiment is described with reference to FIG. 6.

First, the q-axis current command iqref is applied for a certain period of time at a constant torque. When the rotator (rotor) is not moved with the certain period of time of application, the q-axis current command value is increased and is further applied for a certain period of time.

When the movement of the rotor is detected, the q-axis current command value is applied for a certain period of time while remaining at the value (iqref_A1), and the magnetic pole position error angle θerr is adjusted. Since the rotator keeps moving even after the magnetic pole position error angle θerr is rotated 30°, further rotation of 30° is made at pstfb_B1. Thereafter, the q-axis current command value is increased until the movement of the rotator is detected by the position detector 5.

The movement of the rotator is detected when the q-axis current command value is increased to iqref_C1, and the q-axis current command generator 6 generates a signal for applying the q-axis current command value remaining at iqref_C1 for a certain period of time. In this process, since the magnetic pole position adjustor 10 determines that the moving direction is negative, the magnetic pole position is rotated 20° in the negative direction. After a lapse of the certain period of time, the q-axis current command value is increased again.

When the q-axis current command value reaches iqref_D1, since the movement of the rotator is detected, the q-axis current command generator 6 maintains the q-axis current command value constant. Since it is determined that the moving direction in this process is the positive direction, the magnetic pole position adjustor rotates the magnetic pole position 10° in the positive direction.

After this process, since the movement of the rotator is not detected although the q-axis current command value is increased to the maximum value iqref_max in the magnetic pole position estimation processing, the magnetic pole position adjustor 10 determines that the magnetic pole reaches the position at 180° on the d-axis, and the present magnetic pole position error angle θerr is stored as the actual measurement magnetic pole position.

In the q-axis current command application method in this embodiment, it is possible to expect adjusting of the magnetic pole position with the state with a small q-axis current command, and thus it is possible to expect an effect of reducing the movement amount of the rotator (rotor). Since a configuration and a method other than that described above are similar to that of Embodiment 1, the descriptions are omitted.

EMBODIMENT 3

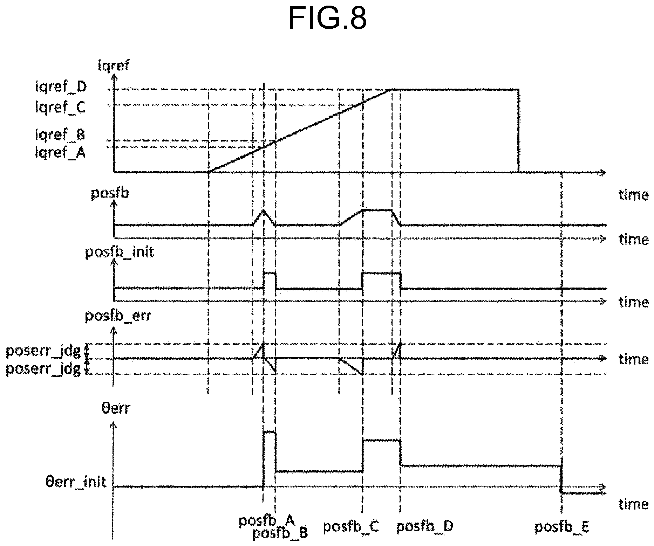

In Embodiment 3, an example in which the magnetic pole position change amount θchg is set at 180° or more when adjusting the magnetic pole position error angle θerr described in Embodiment 1 is described with reference to FIGS. 7 and 8.

In a stage in which the q-axis current command is small, a power applied to the electric motor is small, and the present position posfb of the rotor is not changed. As the application amount of the q-axis current command is increased gradually, a torque applied to the electric motor is increased gradually, and the rotor starts to be moved around the posfb_A. In a stage in which the rotor is moved and reaches the posfb_A point, since the moving direction is the positive direction and the q-axis current command is in the positive direction, the magnetic pole position adjustor 10 determines that the magnetic pole position direction of the electric motor is in the actual q-axis direction.

When the difference posfb_err between the present position posfb and the reference present position posfb init becomes greater than the magnetic pole position change determination value poserrjdg, it is determined that the magnetic pole position error angle θerr with respect to the electric motor needs to be adjusted, and the magnetic pole position adjustor 10 adjusts the magnetic pole position error angle θerr with respect to the electric motor by 210° in the + direction.

Thereafter, since the rotor is moved in the negative direction at the posfb_B point, the magnetic pole position adjustor 10 determines that the magnetic pole position direction of the electric motor is in the negative direction with respect to the actual q-axis. The magnetic pole position adjustor 10 adjusts the magnetic pole position error angle θerr with respect to the electric motor by 200° in the - direction.

At the posfb_C point, since the electric motor is moved in the positive direction, the magnetic pole position error angle θerr with respect to the electric motor is adjusted by 190° in the + direction, which is the same direction as that of the posfb _A point.

At the posfb D point, since the electric motor is moved in the negative direction, the magnetic pole position error angle θerr with respect to the electric motor is in the negative q-axis direction again due to the displacement of the magnetic pole position error angle θerr with respect to the electric motor in the positive direction at the posfb_C point. Thus, as with the posfb_B point, the magnetic pole position error angle θerr with respect to the electric motor is adjusted by 170° in the - direction.

Since the movement deviation posfb_err of the rotor remains at 0 although the q-axis current command is thereafter increased to the maximum value (iqref max) in the magnetic pole position estimation processing, the magnetic pole position adjustor 10 determines that the present magnetic pole position θD is on the d-axis and stores θD as the actual measurement magnetic pole position.

After the actual measurement magnetic pole position is stored, a magnetic pole position that is the magnetic pole position further rotated -90° as shown at the posfb_E point is stored as the control start magnetic pole position, and the magnetic pole position estimation processing is terminated.

In a case where the provisional q-axis direction (q-axis direction recognized by the control device 101) is close to the d-axis direction of the actual electric motor when starting the magnetic pole position estimation processing, since the rotor keeps operating in the positive direction using an adjusting value of 180° or less, the movement amount of the rotor during the magnetic pole position adjustment may be increased.

According to the magnetic pole position estimation method of this embodiment, since the magnetic pole position error angle θerr is displaced by 180° or more, the magnetic pole position direction is directed to the opposite direction, the moving direction of the rotor is not constant, and it is possible to expect the effect of reducing the movement amount during the magnetic pole position adjustment.

Note that, after the magnetic pole position adjustment into the d-axis direction, since the magnetic pole position direction may be in the d-axis inverse direction or in the d-axis positive direction, a small q-axis current command is applied after displacing the magnetic pole position by -90° to confirm the motor driving method. While the q-axis current command is a positive value, the magnetic pole position direction recognized by the control device side when the electric motor is moved in the positive direction is the actual q-axis direction, but since the magnetic pole position direction recognized by the control device side when moving in the negative direction is the opposite direction of that of the actual q-axis, displacement by 180° is performed, and the control start magnetic pole position is stored. This makes it possible to execute the magnetic pole position estimation more precisely.

Since a configuration and a method other than that described above are similar to that of Embodiment 1, the descriptions are omitted.

REFERENCE SIGNS LIST

| | |
|---|---|
| 1 | electric motor |
| 2 | driving target load |
| 3 | coupling shaft |
| 4 | power converter |
| 5 | position detector |
| 6 | q-axis current command generator |
| 7 | current detector |
| 8 | dq conversion unit |
| 9 | current controller |
| 10 | magnetic pole position adjustor |
| 11 | three-phase conversion unit |
| 12 | electric angle calculation unit |
| 101 | control device |

**Claims**

1. A control device for controlling an electric motor (1) including a rotor and a stator and for estimating a magnetic pole position of the electric motor (1),
the control device (101) comprising:

   a magnetic pole position adjustor (10) configured to store an initial position of a magnetic pole position of the electric motor (1) and to rotate the magnetic pole position;
   a q-axis current command generator (6) configured to output a q-axis current command based on which the electric motor (1) is controlled;
   a power converter (4) configured to supply power to the electric motor (1) based on the q-axis current command; and
   a position detector (5) configured to detect a movement amount and a moving direction of the rotor of the electric motor (1),
   wherein the control device (101) is configured to estimate the magnetic pole position of the electric motor (1) by:
   the magnetic pole position adjustor (10) rotating the magnetic pole position in a positive direction or a negative direction according to the moving direction detected by the position detector (5) after the q-axis current command has been outputted, and
   **characterized in that** the magnetic pole position adjustor (10) storing each of a magnetic pole position at which the movement amount of the rotor becomes 0 as an actual measurement magnetic pole position and a magnetic pole position that is the actual measurement magnetic pole position rotated -90 degrees as a control start position.

**2.** The control device according to claim 1, wherein
the q-axis current command generator (6) is configured to increase a q-axis current command value gradually until the movement amount of the rotor becomes 0.

**3.** The control device according to claim 1, wherein
the magnetic pole position adjustor (10) is configured to average a plurality of the magnetic pole positions at which the movement amount becomes 0 and store the average as an actual estimated magnetic pole position.

**4.** The control device according to claim 1, wherein
the q-axis current command generator (6) is configured to increase a q-axis current command value gradually also after the movement amount becomes 0, and when the rotor is moved again, the magnetic pole position adjustor (10) is configured to rotate the magnetic pole position again.

**5.** The control device according to claim 1, wherein
the magnetic pole position adjustor (10) is configured to reduce an amount of rotating the magnetic pole position according to a degree of the q-axis current command value.

**6.** The control device according to claim 1, wherein
the magnetic pole position adjustor (10) is configured to change the initial position when the number of times of rotating the magnetic pole position is a threshold or less.

**7.** A magnetic pole position estimation method for an electric motor, comprising:

a first step in which an initial position of a magnetic pole is set;
a second step in which a q-axis current command value is increased gradually and an operating direction and a movement amount of a rotor are detected;
a third step in which, when the operating direction is positive, a magnetic pole position is rotated in a positive direction to 180 degrees, and when the operating direction is negative, the magnetic pole position is rotated in a negative direction to 180 degrees;
**characterized in that** a fourth step in which a magnetic pole position at which the movement amount of the rotor becomes 0 in the third step is stored as an actual measurement magnetic pole position; and
a fifth step in which a magnetic pole position that is the actual measurement magnetic pole position rotated -90 degrees is stored as a control start position.

**8.** The magnetic pole position estimation method according to claim 7, wherein
in the fourth step, a q-axis current command value is increased gradually until the movement amount of the rotor becomes 0.

**9.** The magnetic pole position estimation method according to claim 7, wherein
in the fourth step, a plurality of the magnetic pole positions at which the movement amount becomes 0 are averaged, and the average is stored as an actual measurement magnetic pole position.

**10.** The magnetic pole position estimation method according to claim 7, wherein
in the fourth step, a q-axis current command value is increased gradually also after the movement amount becomes 0, and when the rotor is moved again, the magnetic pole position is rotated again by the third step.

**11.** The magnetic pole position estimation method according to claim 7, wherein
in the third step, an amount of rotating the magnetic pole position is reduced according to a degree of the q-axis current command value.

**12.** The magnetic pole position estimation method according to claim 7, further comprising:
a sixth step in which the initial position is changed when the number of times of executing the third step is a threshold or less.

**Patentansprüche**

**1.** Steuervorrichtung zum Steuern eines Elektromotors (1), der einen Rotor und einen Stator enthält, und zum Schätzen einer Magnetpolstellung des Elektromotors (1), wobei

die Steuervorrichtung (101) Folgendes umfasst:

eine Magnetpolstellungs-Einstellvorrichtung (10), die konfiguriert ist, eine Ausgangsstellung einer Magnetpolstellung des Elektromotors (1) zu speichern und die Magnetpolstellung zu drehen;
einen q-Achsenstromanweisungsgenerator (6), der konfiguriert ist, eine q-Achsenstromanweisung auszugeben, auf deren Grundlage der Elektromotor (1) gesteuert wird;
einen Leistungsumsetzer (4), der konfiguriert ist, den Elektromotor (1) auf der Grundlage der q-Achsenstromanweisung mit Leistung zu versorgen; und
einen Positionsdetektor (5), der konfiguriert ist, einen Bewegungsbetrag und eine Bewegungsrichtung des Rotors des Elektromotors (1) zu detektieren, und

die Steuervorrichtung (101) konfiguriert ist, die Magnetpolstellung des Elektromotors (1) durch Folgendes zu schätzen:

Drehen durch die Magnetpolstellungs-Einstellvorrichtung (10) der Magnetpolstellung in einer positiven Richtung oder einer negativen Richtung gemäß der Bewegungsrichtung, die durch den Positionsdetektor (5) detektiert wird, nachdem die q-Achsenstromanweisung ausgegeben worden ist,
**dadurch gekennzeichnet, dass** die Magnetpolstellungs-Einstellvorrichtung (10) sowohl eine Magnetpolstellung, bei der der Bewegungsbetrag des Rotors 0 erreicht, als eine Ist-Messmagnetpolstellung als auch eine Magnetpolstellung, die die um -90 Grad gedrehte Ist-Messmagnetpolstellung ist, als eine Steuerstartstellung speichert.

**2.** Steuervorrichtung nach Anspruch 1, wobei
der q-Achsenstromanweisungsgenerator (6) konfiguriert ist, einen q-Achsenstromanweisungswert allmählich zu erhöhen, bis der Bewegungsbetrag des Rotors 0 erreicht.

**3.** Steuervorrichtung nach Anspruch 1, wobei
die Magnetpolstellungs-Einstellvorrichtung (10) konfiguriert ist, den Durchschnitt mehrerer der Magnetpolstellungen, bei denen der Bewegungsbetrag 0 erreicht, zu bilden und den Durchschnitt als eine geschätzte Ist-Magnetpolstellung zu speichern.

**4.** Steuervorrichtung nach Anspruch 1, wobei
der q-Achsenstromanweisungsgenerator (6) konfiguriert ist, einen q-Achsenstromanweisungswert allmählich zu erhöhen, auch nachdem der Bewegungsbetrag 0 erreicht hat, und die Magnetpolstellungs-Einstellvorrichtung (10) konfiguriert ist, dann, wenn der Rotor sich wieder bewegt, die Magnetpolstellung wieder zu drehen.

**5.** Steuervorrichtung nach Anspruch 1, wobei
die Magnetpolstellungs-Einstellvorrichtung (10) konfiguriert ist, einen Betrag des Drehens der Magnetpolstellung gemäß einem Grad des q-Achsenstromanweisungswerts zu verringern.

**6.** Steuervorrichtung nach Anspruch 1, wobei
die Magnetpolstellungs-Einstellvorrichtung (10) konfiguriert ist, die Ausgangsstellung zu ändern, wenn die Anzahl von Drehungen der Magnetpolstellung ein Schwellenwert oder weniger ist.

**7.** Magnetpolstellungs-Schätzverfahren für einen Elektromotor, das Folgendes umfasst:

einen ersten Schritt, in dem eine Ausgangsstellung eines Magnetpols gesetzt wird;
einen zweiten Schritt, in dem ein q-Achsenstromanweisungswert allmählich erhöht wird und eine Arbeitsrichtung und ein Bewegungsbetrag eines Rotors detektiert werden; und
einen dritten Schritt, in dem dann, wenn die Arbeitsrichtung positiv ist, eine Magnetpolstellung in einer positiven Richtung zu 180 Grad gedreht wird und dann, wenn die Arbeitsrichtung negativ ist, die Magnetpolstellung in einer negativen Richtung zu 180 Grad gedreht wird; **gekennzeichnet durch**
einen vierten Schritt, in dem eine Magnetpolstellung, bei der der Bewegungsbetrag des Rotors im dritten Schritt 0 erreicht, als eine Ist-Messmagnetpolstellung gespeichert wird; und
einen fünften Schritt, in dem eine Magnetpolstellung, die die um -90 Grad gedrehte Ist-Messmagnetpolstellung ist, als eine Steuerstartstellung gespeichert wird.

**8.** Magnetpolstellungs-Schätzverfahren nach Anspruch 7, wobei
im vierten Schritt ein q-Achsenstromanweisungswert allmählich erhöht wird, bis der Bewegungsbetrag des Rotors 0 erreicht.

**9.** Magnetpolstellungs-Schätzverfahren nach Anspruch 7, wobei
im vierten Schritt der Durchschnitt mehrerer Magnetpolstellungen, bei denen der Bewegungsbetrag 0 erreicht, gebildet wird und der Durchschnitt als eine Ist-Messmagnetpolstellung gespeichert wird.

**10.** Magnetpolstellungs-Schätzverfahren nach Anspruch 7, wobei
im vierten Schritt ein q-Achsenstromanweisungswert allmählich erhöht wird, auch nachdem der Bewegungsbetrag 0 erreicht hat, und dann, wenn der Rotor wieder bewegt wird, die Magnetpolstellung durch den dritten Schritt wieder gedreht wird.

**11.** Magnetpolstellungs-Schätzverfahren nach Anspruch 7, wobei
im dritten Schritt ein Betrag des Drehens der Magnetpolstellung gemäß einem Grad des q-Achsenstromanweisungswerts verringert wird.

**12.** Magnetpolstellungs-Schätzverfahren nach Anspruch 7, das ferner Folgendes umfasst:
einen sechsten Schritt, in dem die Ausgangsstellung geändert wird, wenn die Anzahl von Ausführungen des dritten Schritts ein Schwellenwert oder weniger ist.


**Revendications**

**1.** Dispositif de commande destiné à commander un moteur électrique (1) incluant un rotor et un stator, et destiné à estimer une position de pôle magnétique du moteur électrique (1),
le dispositif de commande (101) comprenant :

un ajusteur de position de pôle magnétique (10) configuré pour stocker une position initiale d'une position de pôle magnétique du moteur électrique (1) et pour mettre en rotation la position de pôle magnétique ;
un générateur d'ordre de courant d'axe q (6) configuré pour sortir un ordre de courant d'axe q sur la base duquel le moteur électrique (1) est commandé ;
un convertisseur de puissance (4) configuré pour alimenter une puissance au moteur électrique (1) sur la base de l'ordre de courant d'axe q ; et
un détecteur de position (5) configuré pour détecter une amplitude de mouvement et une direction de mouvement du rotor du moteur électrique (1),
dans lequel le dispositif de commande (101) est configuré pour estimer la position de pôle magnétique du moteur électrique (1) via :

l'ajusteur de position de pôle magnétique (10) mettant en rotation la position de pôle magnétique dans une direction positive ou dans une direction négative en accord avec la direction de mouvement détectée par le détecteur de position (5) après que l'ordre de courant d'axe q a été sorti, et **caractérisé en ce que**
l'ajusteur de position de pôle magnétique (10) stocke chaque position parmi une position de pôle magnétique à laquelle l'amplitude de mouvement du rotor devient 0 à titre de position de pôle magnétique de mesurage réelle et une position de pôle magnétique qui est la position de pôle magnétique de mesurage réelle mise en rotation à -90° à titre de position de démarrage de commande.

**2.** Dispositif de commande selon la revendication 1, dans lequel le générateur d'ordre de courant d'axe q (6) est configuré pour augmenter une valeur d'ordre de courant d'axe q graduellement jusqu'à ce que l'amplitude de mouvement du rotor devienne 0.

**3.** Dispositif de commande selon la revendication 1, dans lequel l'ajusteur de position de pôle magnétique (10) est configuré pour moyenner une pluralité de positions de pole magnétique auxquelles l'amplitude de mouvement devient 0 et pour stocker la moyenne à titre de position de pôle magnétique estimée réelle.

**4.** Dispositif de commande selon la revendication 1, dans lequel le générateur d'ordre de courant d'axe q (6) est configuré pour augmenter une valeur d'ordre de courant d'axe q graduellement également après que l'amplitude de mouvement devient 0, et quand le rotor est à nouveau mis en mouvement, l'ajusteur de position de pole magnétique (10) est configuré pour mettre à nouveau en rotation la position de pôle magnétique.

5. Dispositif de commande selon la revendication 1, dans lequel l'ajusteur de position de pôle magnétique (10) est configuré pour réduire une amplitude de rotation de la position de pôle magnétique en accord avec un degré de la valeur d'ordre de courant d'axe q.

6. Dispositif de commande selon la revendication 1, dans lequel l'ajusteur de position de pôle magnétique (10) est configuré pour changer la position initiale quand le nombre de rotations de la position de pôle magnétique atteint un seuil ou moins.

7. Procédé d'estimation de position de pôle magnétique pour un moteur électrique, comprenant :

une première étape dans laquelle une position initiale d'un pôle magnétique est fixée ;
une deuxième étape dans laquelle une valeur d'ordre de courant d'axe q est augmentée graduellement et une direction d'actionnement et une amplitude de mouvement d'un rotor sont détectées ;
une troisième étape dans laquelle, quand la direction d'actionnement est positive, une position de pôle magnétique est mise en rotation dans une direction positive à 180 degrés, et quand la direction d'actionnement est négative, la position de pôle magnétique est mise en rotation dans une direction négative à 180 degrés ;
**caractérisé par**
une quatrième étape dans laquelle une position de pole magnétique à laquelle l'amplitude de mouvement du rotor devient 0 dans la troisième étape est stockée à titre de position de pôle magnétique de mesurage réelle ; et
une cinquième étape dans laquelle une position de pôle magnétique qui est la position de pôle magnétique de mesurage réelle mise en rotation à -90 degrés est stockée à titre de position de démarrage de commande.

8. Procédé d'estimation de position de pôle magnétique selon la revendication 7, dans lequel
dans la quatrième étape, une valeur d'ordre de courant d'axe q est augmentée graduellement jusqu'à ce que l'amplitude de mouvement du rotor devienne 0.

9. Procédé d'estimation de position de pôle magnétique selon la revendication 7, dans lequel
dans la quatrième étape, une pluralité de positions de pole magnétique auxquelles l'amplitude de mouvement devient 0 sont moyennées, et la moyennée est stockée à titre de position de pôle magnétique de mesurage réelle.

10. Procédé d'estimation de position de pôle magnétique selon la revendication 7, dans lequel
dans la quatrième étape, une valeur d'ordre de courant d'axe q est augmentée graduellement également après que l'amplitude de mouvement devient 0, et quand le rotor est à nouveau mis en mouvement, la position de pôle magnétique est à nouveau mise en rotation via la troisième étape.

11. Procédé d'estimation de position de pôle magnétique selon la revendication 7, dans lequel
dans la troisième étape, une quantité de rotations de la position de pôle magnétique est réduite en accord avec un degré de la valeur d'ordre de courant d'axe q.

12. Procédé d'estimation de position de pôle magnétique selon la revendication 7, comprenant en outre :
une sixième étape dans laquelle la position initiale est changée quand le nombre de fois où la troisième étape est exécutée atteint un seuil ou moins.

# FIG.1

q-AXIS CURRENT COMMAND GENERATOR `6`

CURRENT CONTROL-LER `9`

THREE-PHASE CONVERSION UNIT `11`

POWER CONVERTER `4`

ELECTRIC MOTOR `1`

LOAD `2` `3`

`7`

iqref

Vqref

Vdref

V1ref

idref≒0

iq

id

dq CON-VERSION UNIT `8`

MAGNETIC POLE POSITION ADJUSTOR `10`

$\theta^\wedge = \theta_E + \theta_{err}$

`101`

$\theta_E$

ELECTRIC ANGLE CALCULATION UNIT `12`

posfb

POSITION DETECTOR `5`

EP 3 748 840 B1

# FIG.2

ACTUAL q-AXIS

PROVISIONAL q-AXIS OF $\theta_{init}$

PROVISIONAL d-AXIS OF $\theta_{init}$

$\theta_C(=\theta_{err}+\theta_{init}+90)$

$\theta_A(=\theta_{err}+\theta_{init}+90)$

$\theta_D(=\theta_{err}+\theta_{init}+90)$

$\theta_{init}$
($\theta_{err}$ IS 0)

ACTUAL
d-AXIS

$\theta_B(=\theta_{err}+\theta_{init}+90)$

# FIG.3

iqref

iqref_D
iqref_C

iqref_B
iqref_A

posfb

time

time

posfb_init

time

posfb_err

poserr_jdg
poserr_jdg

time

$\theta_{err}$

$\theta_{err\_init}$

time

posfb_A
posfb_B   posfb_C   posfb_D              posfb_E

# FIG.4

START MAGNETIC POLE
POSITION ESTIMATION ～150

SET OPERATION CONDITIONS
DURING ELECTRIC MOTOR
OPERATION ～151

START DRIVING OF
ELECTRIC MOTOR ～152

ROTOR IS
MOVED IN POSITIVE
DIRECTION OR NEGATIVE DIRECTION ～153
BY PREDETERMINED AMOUNT
OR MORE

Yes → ROTATE MAGNETIC POLE
POSITION RECOGNIZED
BY CONTROL DEVICE ～154

No

TERMINATION
CONDITIONS OF ACTUAL ～155
MEASUREMENTMAGNETIC
POLE POSITIONARE
SATISFIED

No

Yes

STORE MAGNETIC POLE
POSITION RECOGNIZED BY ～156
CONTROL DEVICE

NUMBER OF
ACTUAL MEASUREMENT ～157
MAGNETIC POLE POSITIONS
SATISFIES NUMBER SET IN
PROCESSING 151

No

Yes

STORE CONTROL STARTING
MAGNETIC POLE POSITION ～158

TERMINATE MAGNETIC
POLE POSITION ～159
ESTIMATION

# FIG.5A

START ELECTRIC MOTOR OPERATION — 200

q-AXIS CURRENT COMMAND VALUE IS SMALLER THAN q-AXIS CURRENT COMMAND MAXIMUM VALUE? — 201

Yes → INCREASE q-AXIS CURRENT COMMAND VALUE — 202

No

q-AXIS CURRENT COMMAND VALUE IS CERTAIN VALUE OR MORE? — 203

Yes → SET MAGNETIC POLE POSITION CHANGE AMOUNT TO CERTAIN VALUE OR LESS — 204

No

NUMBER OF TIMES OF CHANGING MAGNETIC POLE POSITION IS PREDETERMINED VALUE OR LESS? — 205

Yes → CHANGE STARTING MAGNETIC POLE POSITION AND START ADJUSTING AGAIN — 206

No

TO A — 207

B — 208

q-AXIS CURRENT COMMAND APPLICATION TIME IS NOT PASSED YET? — 209

Yes

No

TERMINATE ELECTRIC MOTOR OPERATION — 210

# FIG.5B

A — 250

(Posfb — posfb_init)>poserr_jdg — 251

Yes

No

CHANGE MAGNETIC
POLE POSITION
θerr+θchg — 252

UPDATE MAGNETIC POLE
POSITION ESTIMATION
DETERMINATION REFERENCE
PRESENT POSITION
posfb_init = posfb — 253

REDUCE MAGNETIC POLE
POSITION CHANGE AMOUNT
θchg = θchg - 1 — 254

(Posfb — posfb_init)<-poserr_jdg — 261

Yes

No

CHANGE MAGNETIC
POLE POSITION
θerr — θchg — 262

UPDATE MAGNETIC POLE
POSITION ESTIMATION
DETERMINATION REFERENCE
PRESENT POSITION
posfb_init = posfb — 263

REDUCE MAGNETIC POLE
POSITION CHANGE AMOUNT
θchg = θchg — 1 — 264

TO B — 270

# FIG.6

# FIG.7

# FIG.8

**EP 3 748 840 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019134620 B
- JP 2014036450 A
- EP 2200174 A1
- JP 2006296027 A
- US 2010286948 A1